# DEMANDE DE BREVET EUROPEEN

(11) **EP 1 309 180 A1**
(43) Date de publication de la demande: **07.05.2003**
(21) Numéro de dépôt: 02079394.9
(22) Date de dépôt: 22.10.2002
(51) Int. Cl.: H04N 3/32

(54) **Appareil d'affichage d'un signal vidéo au moyen d'un système de balayage**

(30) Priorité: 30.10.2001 FR 0114049
(71) Demandeur: Koninklijke Philips Electronics N.V., 5621 BA Eindhoven (NL)
(72) Inventeur: Vilard, Philippe, Société Civile S.P.I.D., 75008 Paris (FR); Bogaert, Marnik, Société Civile S.P.I.D., 75008 Paris (FR)
(74) Mandataire: Chaffraix, Jean

(57) **Abrégé**

L'invention concerne un appareil d'affichage pour afficher un signal vidéo sur un écran au moyen d'un balayage, ledit signal vidéo étant caractérisé par un ensemble de paramètres, ledit appareil d'affichage comprenant un circuit dérivateur pour générer un signal de dérivée à partir dudit signal vidéo, un circuit de seuillage pour effectuer un seuillage à un seuil donné sur ledit signal de dérivée afin de générer un signal de dérivée modifié, un circuit de modulation pour moduler la vitesse de balayage à partir dudit signal de dérivée modifié.

L'invention permet d'améliorer l'impression de contraste sur des transitions de faible amplitude, sans accentuer le signal de bruit contenu dans le signal vidéo. Pour cela, l'appareil d'affichage est remarquable en ce qu'il comprend des moyens additionnels pour faire varier la valeur dudit seuil en fonction desdits paramètres.

## Description

### DOMAINE DE L'INVENTION

L'invention concerne un appareil d'affichage pour afficher un signal vidéo sur un écran au moyen d'un balayage, ledit signal vidéo étant caractérisé par un ensemble de paramètres, ledit appareil d'affichage comprenant :
- un circuit dérivateur pour générer un signal de dérivée à partir dudit signal vidéo,
- un circuit de seuillage pour effectuer un seuillage à un seuil donné sur ledit signal de dérivée, afin de générer un signal de dérivée modifié,
- un circuit de modulation pour moduler la vitesse de balayage à partir dudit signal de dérivée modifié.

L'invention a de nombreuses applications dans les afficheurs de signaux vidéo sur un écran à tube cathodique.

### ARRIERE PLAN TECHNOLOGIQUE DE L'INVENTION

Pour améliorer le rendu du contenu d'un signal vidéo, il est particulièrement intéressant d'accentuer l'impression de contraste de l'image, c'est-à-dire accentuer visuellement les parties du signal vidéo correspondant aux transitions.

Par transitions, il faut entendre un paramètre reflétant à la fois la fréquence de la transition (c'est-à-dire dans le domaine fréquentiel) et l'amplitude de la transition (dans le domaine de l'image).

Lorsque le signal vidéo est affiché sur un tube cathodique, l'accentuation du contraste peut se faire à l'aide d'un circuit de type SCAVEM (abréviation de l'anglais "Scan Velocity Modulation") qui vient moduler la vitesse de balayage du faisceau d'électrons sur le tube cathodique. La modulation de vitesse est faite en fonction d'un signal de dérivée obtenu à partir du signal vidéo à afficher qui est appliqué à un circuit de modulation comprenant une bobine située dans le tube cathodique.

Un signal vidéo réel est l'addition d'un signal informationnel véhiculant le contenu vidéo, et d'un signal de bruit, le signal de bruit résultant du bruit thermique et/ou d'une composante résiduelle de sous-porteuse dans le signal de luminance. Afin de ne pas amplifier à l'affichage l'éventuel signal de bruit contenu dans le signal vidéo, l'action du SCAVEM est supprimée pour les transitions dont les valeurs sont inférieures à un seuil fixé.

Le brevet des Etats Unis d'Amérique US 5,587,745 décrit un circuit de ce type.

Ces moyens d'accentuation du contraste d'un signal vidéo présentent un certain nombre de limitations.

Le seuil au-dessus duquel les transitions sont accentuées est fixe. Afin de ne pas risquer d'accentuer des transitions de faibles amplitudes générées par le bruit contenu dans différents signaux vidéo à afficher, la valeur du seuil est relativement importante. La valeur de ce seuil est d'autant plus importante qu'elle doit majorer les amplitudes maximales des transitions générées par le bruit des différents signaux vidéo à afficher, ces signaux contenant a-priori plus ou moins de bruit.

Lorsque ces moyens d'accentuation sont appliqués à des signaux vidéo contenant un faible niveau de bruit, ils conduisent certes à une accentuation du contraste pour les transitions de forte amplitude, mais cette accentuation n'est pas optimale dans la mesure où le seuil d'accentuation est trop élevé par rapport au niveau de bruit. Autrement dit, des transitions de faible amplitude véhiculant des informations de contenu vidéo - et non du bruit - ne sont pas accentuées.

D'autre part, les transitions d'amplitude supérieure audit seuil sont accentuées de façon progressive. L'accentuation est d'autant plus faible que les transitions ont une valeur proche dudit seuil, et d'autant plus forte que les transitions ont une valeur supérieure audit seuil. Cela est une conséquence de la fixation a-priori de la valeur dudit seuil qui implique d'effectuer une accentuation modérée des transitions à son voisinage pour ne pas risquer d'accentuer des transitions générées par le bruit résiduel : l'accentuation du signal vidéo concerne donc principalement les transitions de forte amplitude. Les transitions de plus faible amplitude de valeur supérieure audit seuil ne sont donc que modérément accentuées, ce qui se traduit par un manque de contraste dans certaines parties du signal vidéo.

### RESUME DE L'INVENTION

L'invention a pour but de proposer un appareil d'affichage d'un signal vidéo permettant d'améliorer l'impression de contraste sur des transitions de faible amplitude, sans accentuer le signal de bruit contenu dans le signal vidéo.

Pour cela, l'appareil d'affichage est remarquable en ce qu'il comprend des moyens additionnels pour faire varier la valeur dudit seuil en fonction desdits paramètres.

De cette façon, la valeur du seuil au-dessus duquel les transitions sont accentuées est automatiquement ajustée en fonction de la valeur desdits paramètres. En particulier, la valeur du seuil est ajustée en fonction du niveau de bruit dudit signal vidéo.

Si le signal vidéo contient un niveau de bruit élevé, le seuil aura une valeur importante. A contrario, si le signal vidéo contient un faible niveau de bruit, le seuil aura une faible valeur. L'ajustement automatique du seuil permet d'effectuer donc une accentuation optimale des transitions, quel que soit le niveau de bruit contenu dans le signal vidéo.

Si la valeur du seuil est automatiquement ajustée au niveau maximum des transitions générées par le bruit contenu dans le signal vidéo, l'accentuation des transitions est optimale et il n'y a que les transitions générées par le bruit qui ne sont pas accentuées. Autrement dit, seules les transitions du signal véhiculant le contenu vidéo sont accentuées.

Dans la mesure où le seuil au-dessus duquel les transitions peuvent être amplifiées est connu, il devient possible d'effectuer une forte accentuation du contraste pour des transitions dont le niveau n'est que peu supérieur audit seuil. L'accentuation du contraste est alors faite sur toutes les transitions du signal véhiculant le contenu vidéo, ce qui conduit à une image de meilleure qualité.

La valeur du seuil peut aussi être ajustée en fonction du type du signal vidéo. De cette façon, avec la connaissance a-priori de la qualité du signal vidéo en fonction de son type, l'accentuation des transitions est optimisée. De plus, cette solution est peu coûteuse puisqu'elle implique simplement de détecter le type du signal vidéo.

En particulier, un signal de type Rouge-Vert-Bleu (RVB) contient a priori moins de bruit qu'un signal de type PAL, qui lui-même contient a priori moins de bruit qu'un signal de type SECAM. Ainsi, trois valeurs de seuil sont définies a priori suivant le type du signal vidéo : un seuil de valeur faible pour le signal de type RVB, un seuil de valeur moyenne pour le signal de type PAL, et un seuil de valeur importante pour le signal de type SECAM.

De même, la valeur du seuil peut aussi être ajustée en fonction de la répartition de la puissance spectrale dudit signal vidéo, dans la mesure où la répartition spectrale permet d'identifier la plage de fréquences correspondant à la contribution du signal de bruit.

L'invention est aussi remarquable en ce que lesdits moyens additionnels comprennent :
- des moyens d'analyse pour analyser et extraire dudit signal vidéo lesdits paramètres,
- des moyens de conversion pour convertir lesdits paramètres en un signal de commande pour faire varier la valeur dudit seuil.

Les moyens d'analyse permettent en particulier de mesurer le niveau de bruit contenu dans le signal vidéo, de détecter le type du signal dudit signal vidéo (PAL-SECAM-RVB-NTSC ...), ou bien de mesurer la répartition de la puissance spectrale dudit signal vidéo. Ces moyens d'analyse de type processeur de signal permettent de réactualiser en permanence la connaissance des caractéristiques du signal vidéo à afficher, ce qui est particulièrement intéressant si le niveau de bruit du signal vidéo change, ou bien si le type du signal vidéo change. Via une conversion de type numérique-analogique desdits paramètres en un signal de commande, la valeur du seuil au-dessus duquel les transitions sont accentuées est en permanence optimisée aux caractéristiques du signal vidéo. Le signal de dérivée du signal de luminance est modifié par le circuit de seuillage de sorte que les transitions de niveau inférieur audit seuil - correspondant aux transitions générées par le bruit - sont mises à zéro de façon à ne pas être accentuées. Le signal de dérivée ainsi modifié est appliqué au circuit de modulation.

L'invention est aussi remarquable en ce que ledit circuit de seuillage est formé de deux circuits comprenant chacun un transistor monté en suiveur de tension, et polarisé par ledit signal de commande.

Le circuit de seuillage à seuil variable commandé par le signal de commande est composé de deux circuits symétriques, l'un effectuant le seuillage pour les transitions positives et l'autre effectuant le seuillage des transitions négatives. Le réglage de la valeur du seuil, en agissant directement sur la polarisation du transistor via le niveau du signal de commande, est simple et précis. De plus, la structure de chaque circuit comprend un faible nombre de composants, ce qui conduit à une solution peu coûteuse.

L'invention est aussi remarquable en ce que l'appareil comprend un circuit d'écrêtage pour écrêter ledit signal de dérivée modifié.

Pour ne pas accentuer de façon exagérée les transitions du signal vidéo, et ainsi éviter une déformation du contenu vidéo, il est prévu de limiter l'amplitude du signal de dérivée après seuillage en l'écrêtant à une valeur fixée.

L'invention concerne également un appareil de télévision pour améliorer l'impression de contraste d'un signal vidéo, ledit appareil de télévision implémentant les différents moyens caractéristiques présentés ci-dessus.

L'invention concerne également sur une méthode d'affichage dont les étapes correspondent aux différentes fonctions remplies par les moyens présentés ci-dessus.

### BREVE DESCRIPTION DES DESSINS

Ces aspects de l'invention ainsi que d'autres aspects plus détaillés apparaîtront plus clairement grâce à la description suivante, faite en regard des dessins ci-annexés, le tout donné à titre d'exemple non limitatif, dans lesquels :
La figure 1 décrit un mode de réalisation de l'invention,
La figure 2 montre la variation du niveau de l'accentuation des transitions du signal vidéo en fonction du niveau des transitions dudit signal vidéo,
Les figures 3 et 4 montrent la variation de la valeur du seuil en fonction des niveaux des signaux de commande,
Les figures 5 et 6 montrent un exemple de l'évolution des signaux de commande en fonction de la valeur des paramètres caractérisant le signal vidéo à afficher,
La figure 7 montre la modification d'un signal de dérivée selon l'invention,
La figure 8 montre un appareil d'affichage pour afficher le contenu d'un signal vidéo sur un écran.

### DESCRIPTION DE MODES DE REALISATION DE L'INVENTION

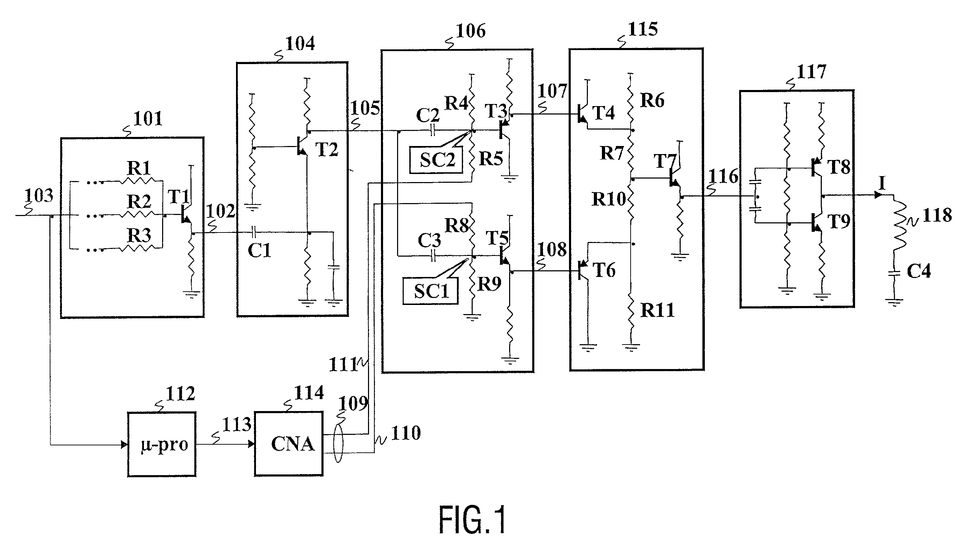

La figure 1 décrit un mode de réalisation de l'invention. Ce mode de réalisation comprend un circuit de matriçage 101 des composantes de couleurs rouge-vert-bleu permettant de délivrer un signal de luminance 102 à partir du signal vidéo 103 à afficher sur un tube cathodique. Le signal de luminance 102 est ensuite dérivé par un circuit dérivateur 104 délivrant un signal de dérivée 105. Le signal de dérivée 105 subit alors une opération de seuillage par le circuit de seuillage 106 à seuil variable. Le circuit de seuillage reçoit un double signal de commande 109 composé d'un premier signal de commande 110 pour faire varier la valeur du seuil pour le seuillage des transitions positives, et d'un deuxième signal de commande 111 pour faire varier la valeur du seuil pour le seuillage des transitions négatives. En parallèle, des moyens de calcul 112 délivrent des caractéristiques 113 extraites dudit signal vidéo à des moyens de conversion 114 chargés de les convertir en ledit double signal de commande 109. Le circuit de seuillage 106 délivre un double signal de sortie 107-108, un premier signal de sortie 108 véhiculant les transitions positives modifiées, un deuxième signal 107 véhiculant les transitions négatives modifiées. Ce double signal de sortie est ensuite écrêté par le circuit d'écrêtage 115 pour délivrer un signal de dérivée écrêté 116. Le signal de dérivée écrêté 116 est alors amplifié par le circuit amplificateur 117 pour délivrer un courant I d'amplitude proportionnelle audit signal écrêté 116 dans la bobine de déflexion 118 (mise en série avec une capacité C4), ces deux éléments permettant de moduler la vitesse de balayage du tube cathodique.

Le signal vidéo 103 est supposé être un signal de couleurs, se décomposant par exemple selon trois composantes de couleur R, V et B. Cependant, il faut noter que l'invention est aussi utilisable dans le cas d'un signal vidéo noir et blanc. En effet, dans ce cas, le signal de luminance correspond directement au signal vidéo.

Le circuit de matriçage 101 est composé de trois résistances R1-R2-R3 dont les valeurs permettent d'effectuer une somme pondérée des composantes de couleur R, V et B pour délivrer un signal de luminance. Le signal de luminance est amplifié par un gain unitaire par le transistor T1 afin de délivrer le signal de luminance 102 à basse impédance.

Le circuit dérivateur 104 est constitué d'une capacité C1 recevant sur une borne ledit signal de luminance 102, et ayant son autre borne reliée à l'émetteur du transistor T2. Le transistor T2 est alors attaqué en courant via la capacité C1, ce qui permet de délivrer sur son collecteur un signal de sortie 105 proportionnel à la dérivée dudit signal de luminance 102.

Le circuit de seuillage à seuil variable 106 est constitué de deux circuits symétriques, l'un pour le seuillage des transitions positives, l'autre pour le seuillage des transitions négatives. La valeur des seuils pour le seuillage des transitions positives et négatives est indépendant.

Concernant le seuillage des transitions positives : Le transistor T5 est polarisé sur sa base par une tension de commande SC1 issue du pont diviseur formé des résistances R8 et R9, c'est-à-dire par une fraction du signal de commande 110 permettant de faire varier la valeur du seuillage des transitions positives. Le transistor T5 reçoit aussi via la capacité de liaison C3 le signal de dérivée 105. Si ladite tension SC1 est inférieure d'une quantité Δ1 à la tension seuil Vbe de la jonction base-émetteur du transistor T5, le transistor T5 ne sera conducteur que pour des transitions positives de valeur supérieure à Δ1. Autrement dit, la valeur de seuillage correspond à la quantité Δ1 et le transistor T5 délivre en sortie seulement les transitions positives supérieures à la valeur dudit seuil.

Concernant le seuillage des transitions négatives : Le transistor T3 est polarisé sur sa base par une tension de commande SC2 issue du pont diviseur formé des résistances R4 et R5, c'est-à-dire par une fraction du signal de commande 111 permettant de faire varier la valeur du seuillage des transitions négatives. Le transistor T3 reçoit aussi via la capacité de liaison C2 le signal de dérivée 105. Si ladite tension SC2 est supérieure d'une quantité Δ2 à la valeur (VCC - Vbe), VCC étant la valeur de l'alimentation et Vbe la tension seuil de la jonction base-émetteur du transistor T3, le transistor T3 ne sera conducteur que pour des transitions négatives de valeur inférieure à -Δ2. Autrement dit, la valeur de seuillage correspond à la quantité -Δ2 et le transistor T3 délivre en sortie seulement les transitions négatives de niveau inférieur à la valeur dudit seuil.

Il faut noter que chaque pont diviseur de tension pourrait être remplacé par une attaque directe en tension par un signal de commande d'amplitude adéquate. Cependant, l'utilisation des ponts diviseurs de tension permet de travailler avec un signal de commande de plus grande amplitude généré par le convertisseur, ce qui facilite le choix du convertisseur de type numérique-analogique dont la plupart sont dédiés à la génération de valeurs de grande amplitude.

Le circuit d'écrêtage 115 permet l'écrêtage dudit premier signal de sortie 108 véhiculant les transitions positives modifiées au moyen du transistor T6, et l'écrêtage dudit second signal de sortie 107 véhiculant les transitions négatives modifiées au moyen du transistor T4. Le niveau d'écrêtage des transitions positives et le niveau d'écrêtage des transitions négatives sont réglés via le jeu de résistances R6-R7-R10-R11 qui permettent de faire varier le seuil de blocage et de saturation des transistors T4 et T6. Via une amplification d'un gain unitaire par le transistor T7, le circuit d'écrêtage 115 délivre à sa sortie un signal de dérivée modifié 116 véhiculant les transitions positives et négatives.

Dans l'éventualité où aucun écrêtage n'est souhaité, les jonctions base-émetteur des transistors T4 et T6 sont court-circuitées.

Le signal de dérivée modifié et écrêté 116 est amplifié par le circuit d'amplification 117. Ce circuit est basé sur l'utilisation de deux transistors complémentaires T8 et T9 délivrant sur leur collecteur le signal de sortie amplifié appliqué à la bobine 118 et à la capacité C4.

Les moyens de calcul 112 analysent le signal vidéo 103 pour en extraire des paramètres caractéristiques 113. Ces moyens de calcul sont de préférence de type processeur de signal afin de pouvoir effectuer sur une même unité de traitement, des analyses ou des calculs de nature différente.

En particulier, le niveau de bruit du signal vidéo est estimé au moyen de méthodes connues de l'homme du métier, en s'appuyant par exemple sur des méthodes de filtrage. La répartition spectrale du signal vidéo peut également être calculée pour identifier les plages de fréquences affectées par le signal de bruit qui ne devront pas subir d'accentuation. Plus simplement, en analysant le type de codage du signal vidéo, les moyens de calcul peuvent identifier le type du signal vidéo, par exemple parmi les types PAL-SECAM-RVB-NTSC.

De préférence, les moyens de calcul 112 réactualisent périodiquement les paramètres caractéristiques du signal vidéo 103, avec une période supérieure à celle de la période d'image. En effet, cela évite de modifier le contraste d'image plusieurs fois par image, ce qui serait fatiguant visuellement pour un utilisateur.

Les moyens de conversion 114 permettent de délivrer le double signal de commande 109 composé du signal de commande 110 et du signal de commande 111. Ils permettent de faire varier le niveau des signaux de commande 110-111 en fonction de la valeur des paramètres 113. Par exemple, le niveau des signaux de commande SC1-SC2, c'est-à-dire des signaux de commande 110-111, peut être proportionnel au niveau de bruit mesuré dans le signal vidéo 103, ou bien prendre une valeur différente pour chaque type de signal vidéo.

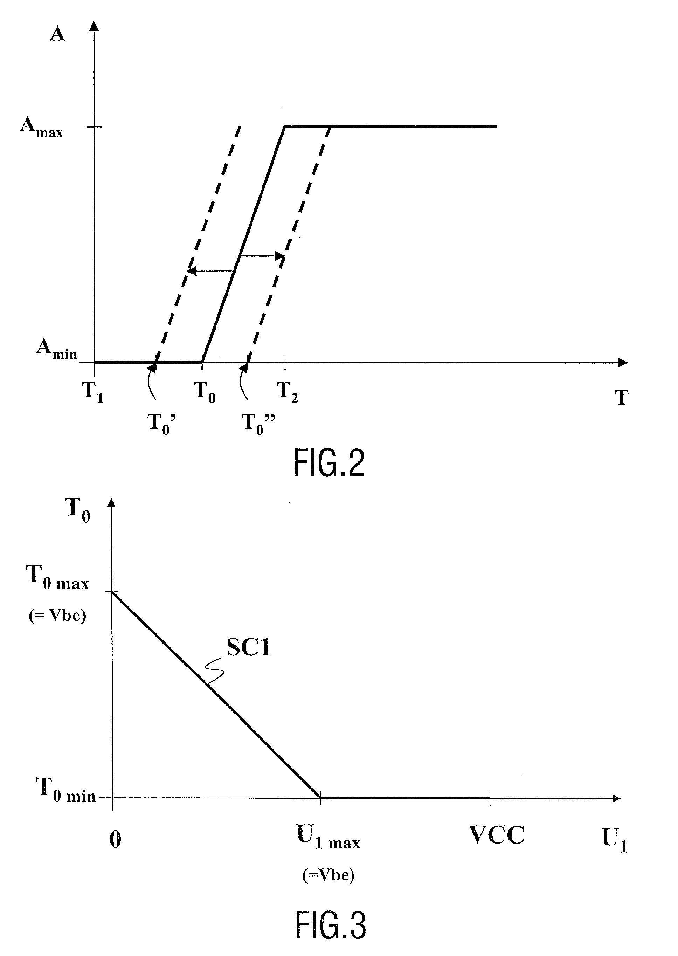

La figure 2 montre la variation du niveau de l'accentuation A des transitions du signal vidéo en fonction du niveau des transitions T (en valeur absolue) dudit signal vidéo. Cette figure illustre parfaitement la caractéristique de l'invention permettant de faire varier la valeur du seuil T₀ au-dessus duquel les transitions ne sont pas accentuées. La variation du seuil T₀ est ici illustrée pour deux valeurs de seuil T₀' et T₀".

Une première plage [T₁, T₀] définit une zone dans laquelle les transitions de faible niveau ne sont pas accentuées car elles sont générées par le signal de bruit. Il s'agit en d'autres termes de la zone de seuillage où les transitions sont forcées à la valeur Aₘᵢₙ = 0.

Une deuxième plage [T₀, T₂] définit une zone dans laquelle les transitions sont accentuées, par exemple de façon proportionnelle à leur niveau. En effet, la valeur du seuil T₀ est automatiquement ajustée de façon à ce que l'accentuation des transitions soit faite pour les transitions générées par le signal informationnel. La pente d'accentuation peut être ainsi d'autant plus forte que le seuil T₀ est connu de façon précise, ce qui permet d'avoir une forte accentuation sur toutes les transitions du signal informationnel.

Une troisième plage [T₂,...] définit une zone dans laquelle les transitions sont accentuées de la même façon. Il s'agit en d'autres termes de la zone d'écrêtage où les transitions sont forcées à la valeur Aₘₐₓ.

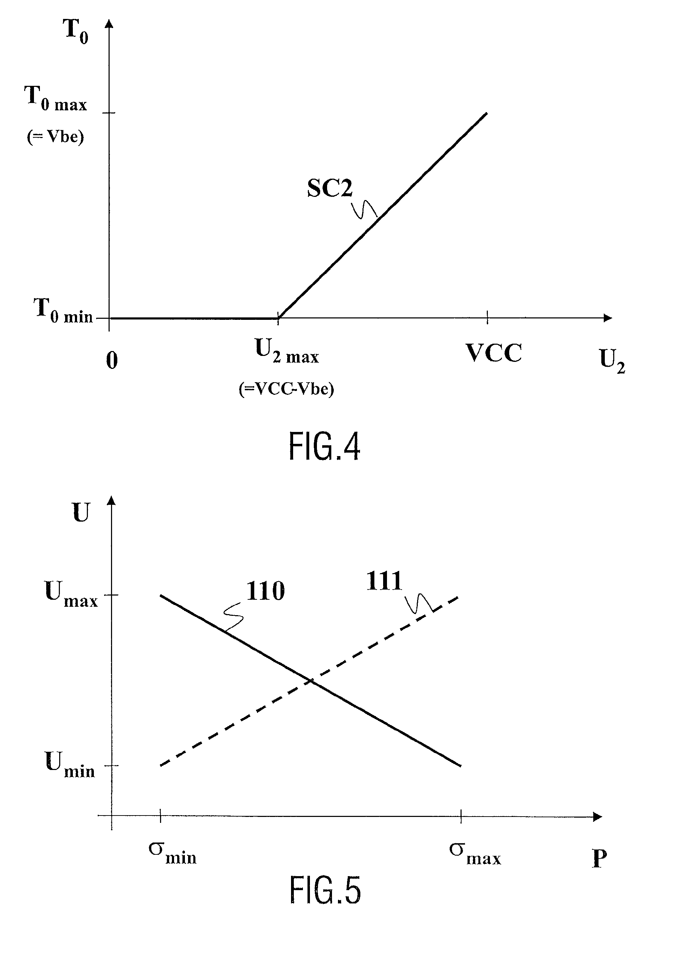

Les figures 3 et 4 montrent la variation de la valeur du seuil T₀ (en valeur absolue) en fonction des niveaux U₁ et U₂ des signaux SC1 et SC2 respectivement. Comme décrit à la figure 1, les signaux SC1 et SC2 sont délivrés par les ponts diviseurs de tension formés par R4-R5 et R8-R9, et leur niveau correspond respectivement à une fraction du niveau des signaux de commande 110 et 111.
La figure 3 fait apparaître deux plages distinctes de variation de la valeur du seuil T₀ :
- une première plage [0, U_{1 max}] définit une zone dans laquelle la valeur du seuil T₀ décroît linéairement lorsque la tension U₁ augmente, ce qui entraîne que les transitions positives de faible niveau dans le signal de dérivée 105 sont de moins en moins atténuées par le seuillage. Il s'agit par exemple d'un signal vidéo à afficher contenant un signal de bruit non nul.
- une deuxième plage [U_{1 max}, VCC] définit une zone dans laquelle la valeur du seuil T₀ reste à un niveau minimum constant T_{0 min} lorsque la tension U₁ augmente, ce qui entraîne qu'aucune transition positive dans le signal de dérivée 105 n'est atténuée par le seuillage. Si T_{0 min} = 0, il s'agit par exemple d'un signal vidéo à afficher ne contenant pas de signal de bruit.
De même, la figure 4 fait apparaître deux plages distinctes de variation de la valeur du seuil T₀ :
- une première plage [0, U_{2 max}] définit une zone dans laquelle la valeur du seuil T₀ reste à un niveau minimum constant T_{0 min} lorsque la tension U₂ augmente, ce qui entraîne que aucune transition négative dans le signal de dérivée 105 n'est atténuée par le seuillage. Si T_{0 min} = 0, il s'agit par exemple d'un signal vidéo à afficher ne contenant pas de signal de bruit.
- une deuxième plage [U_{2 max}, VCC] définit une zone dans laquelle la valeur du seuil T₀ croît linéairement lorsque la tension U₂ augmente, ce qui entraîne que les transitions négatives de faible niveau dans le signal de dérivée 105 sont de plus en plus atténuées par le seuillage. Il s'agit par exemple d'un signal vidéo à afficher contenant un signal de bruit non nul.

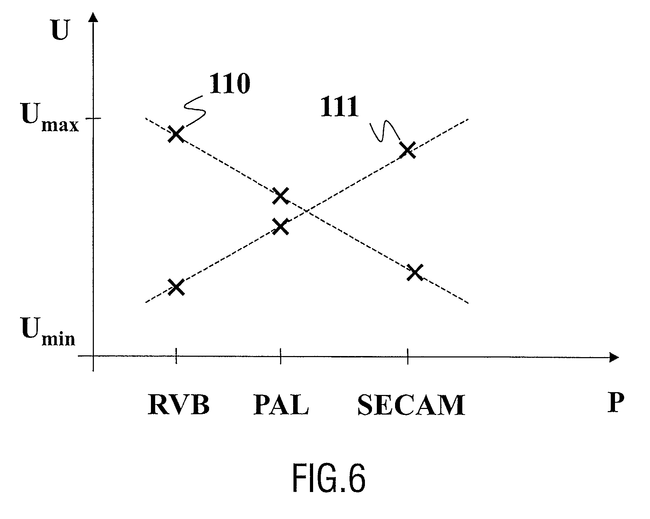

La figure 5 et la figure 6 montrent à titre d'exemple non limitatif l'évolution des signaux de commande 110 et 111 en fonction de la valeur des paramètres P caractérisant le signal vidéo 103 à afficher, les signaux 110 et 111 étant générés par les moyens de conversion 114.

La figure 5 montre une évolution linéaire continue des signaux de commande 110 et 111 en fonction du niveau de bruit σ pris comme paramètre caractéristique du signal vidéo à afficher 103. Ainsi, à chaque niveau de bruit σ mesuré par les moyens de calcul 112, est défini un niveau de sortie U pour les signaux 110 et 111.

La figure 6 montre une évolution linéaire discrète des signaux de commande 110 et 111 en fonction du format du signal vidéo 103 pris comme paramètre. Ainsi, à chaque format du signal vidéo identifié par les moyens de calcul 112, et auquel une valeur est associée, est défini un niveau de sortie U pour les signaux 110 et 111. Cela suppose de définir a priori un classement des formats vidéo, en fonction de leur niveau de bruit par exemple.

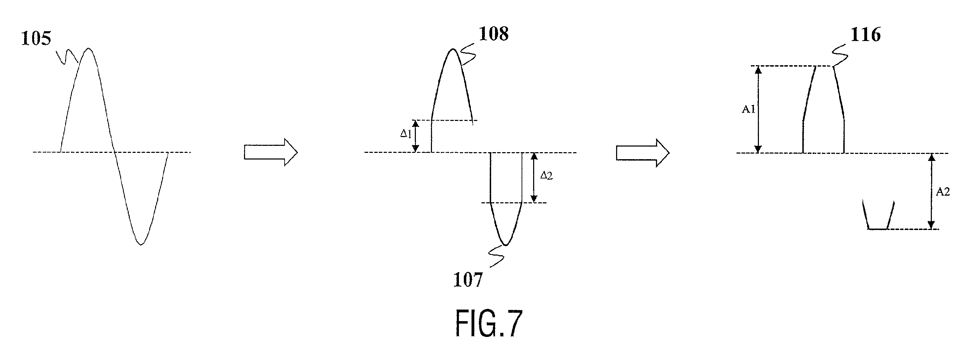

La figure 7 montre la modification d'un signal de dérivée 105 par le circuit de seuillage 106 et le circuit d'écrêtage 115 selon l'invention.

Cette figure illustre le seuillage effectué sur la partie positive de la transition en ce sens que sur cette partie positive, seules les valeurs au-dessus du seuil Δ1 sont transmises pour former le signal de dérivée modifié 108. De même, cette figure illustre le seuillage effectué sur la partie négative de la transition en ce sens que sur cette partie négative, seules les valeurs au-dessous du seuil Δ2 sont transmises pour former le signal de dérivée modifié 107.

Dans un second temps, les signaux 108 et 107 sont écrêtés respectivement à la valeur A1 pour la partie positive de la transition, et à la valeur A2 pour la partie négative de la transition, afin de former le signal de dérivé modifié écrêté 116.

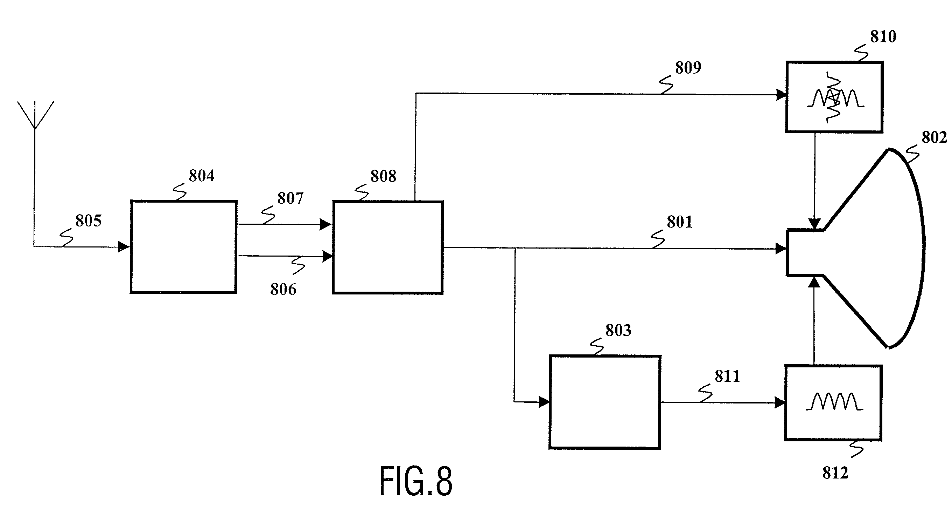

La figure 8 illustre un appareil d'affichage pour afficher le contenu d'un signal vidéo 801 sur un écran 802 de type afficheur à tube cathodique. Cet appareil comprend un dispositif 803 selon l'invention pour améliorer l'impression de contraste du signal vidéo affiché. Cet appareil d'affichage correspond en particulier à un appareil de télévision.

Cet appareil comprend un dispositif d'accordement et de démodulation 804 pour accorder et démoduler un signal radio-fréquence 805. Le dispositif 804 délivre un signal vidéo démodulé 806 ainsi qu'un ensemble de signaux de synchronisation et de déflexion 807. Un circuit de traitement 808 effectue le traitement et l'amplification des signaux 807-808 pour délivrer d'une part ledit signal vidéo 801, et d'autre part des signaux amplifiés de déflexion 809. Les signaux 809 sont appliqués aux bobines de déflexion 810 en charge du balayage horizontal et vertical du faisceau d'électrons dans le tube 802. Le signal 801 est un signal de type R, V, B appliqué au tube 802.

Un dispositif 803 selon l'invention tel que décrit à la figure 1 et comprenant en particulier un circuit de seuillage à seuil variable, reçoit en entrée le signal vidéo 801, et délivre un signal de dérivée modifié 811. Le signal 811 est appliqué au circuit de modulation 812 qui comprend une bobine de déflexion additionnelle en charge de moduler la vitesse horizontale dudit faisceau d'électrons.

La portée de l'invention telle que décrite et permettant de faire varier la valeur du seuil dans le circuit de seuillage ne se limite pas à l'implémentation proposée à travers le schéma de la figure 1. Par exemple, il serait tout à fait possible de réaliser l'opération de seuillage à seuil variable au moyen d'un algorithme dont les codes de commandes seraient stockés dans une mémoire et exécutés au moyen d'un processeur de signal.

## Revendications

1. Appareil d'affichage pour afficher un signal vidéo sur un écran au moyen d'un balayage, ledit signal vidéo étant **caractérisé par** un ensemble de paramètres, ledit appareil d'affichage comprenant :
- un circuit dérivateur pour générer un signal de dérivée à partir dudit signal vidéo,
- un circuit de seuillage pour effectuer un seuillage à un seuil donné sur ledit signal de dérivée, afin de générer un signal de dérivée modifié,
- un circuit de modulation pour moduler la vitesse de balayage à partir dudit signal de dérivée modifié,
**caractérisé en ce que** l'appareil d'affichage comprend des moyens additionnels pour faire varier la valeur dudit seuil en fonction desdits paramètres.

2. Appareil d'affichage selon la revendication 1 **caractérisé en ce que** lesdits paramètres correspondent au niveau de bruit dudit signal vidéo, à son format ou bien à sa puissance spectrale.

3. Appareil d'affichage selon la revendication 2 **caractérisé en ce que** lesdits moyens additionnels comprennent:
- des moyens d'analyse pour analyser et extraire dudit signal vidéo lesdits paramètres,
- des moyens de conversion pour convertir lesdits paramètres en un signal de commande pour faire varier la valeur dudit seuil.

4. Appareil d'affichage selon la revendication 3 **caractérisé en ce que** lesdits moyens d'analyse comprennent un processeur de signal et **en ce que** lesdits moyens de conversion comprennent un convertisseur numérique-analogique.

5. Appareil d'affichage selon la revendication 4 **caractérisé en ce que** ledit circuit de seuillage est formé de deux circuits comprenant chacun un transistor monté en suiveur de tension, et polarisé par ledit signal de commande.

6. Appareil d'affichage selon la revendication 1 à **5 caractérisé en ce qu'**il comprend un circuit d'écrêtage pour écrêter ledit signal de dérivée modifié.

7. Méthode d'affichage pour afficher un signal vidéo sur un écran au moyen d'un balayage, ledit signal vidéo étant **caractérisé par** un ensemble de paramètres, ladite méthode d'affichage comprenant :
- une étape de dérivation pour générer un signal de dérivée à partir dudit signal vidéo,
- une étape de seuillage pour effectuer un seuillage à un seuil donné sur ledit signal de dérivée, afin de générer un signal de dérivée modifié,
- une étape de modulation pour moduler la vitesse de balayage à partir dudit signal de dérivée modifié,
**caractérisé en ce que** l'appareil d'affichage comprend une étape additionnelle pour faire varier la valeur dudit seuil en fonction desdits paramètres.

8. Appareil de télévision comprenant un écran pour afficher un signal vidéo au moyen d'un balayage, ledit signal vidéo étant **caractérisé par** un ensemble de paramètres, ledit appareil de télévision comprenant :
- un circuit dérivateur pour générer un signal de dérivée à partir dudit signal vidéo,
- un circuit de seuillage pour effectuer un seuillage à un seuil donné sur ledit signal de dérivée, afin de générer un signal de dérivée modifié,
- un circuit de modulation pour moduler la vitesse de balayage à partir dudit signal de dérivée modifié,
**caractérisé en ce que** l'appareil de télévision comprend des moyens additionnels pour faire varier la valeur dudit seuil en fonction desdits paramètres.

9. Appareil de télévision selon la revendication 8 **caractérisé en ce que** lesdits paramètres correspondent au niveau de bruit dudit signal vidéo, à son format ou bien à sa puissance spectrale.

10. Appareil de télévision selon la revendication 9 **caractérisé en ce que** lesdits moyens additionnels comprennent :
- des moyens d'analyse pour analyser et extraire dudit signal vidéo lesdits paramètres,
- des moyens de conversion pour convertir lesdits paramètres en un signal de commande pour faire varier la valeur dudit seuil.
